# EUROPÄISCHE PATENTANMELDUNG

(11) **EP 0 976 593 A1**
(43) Veröffentlichungstag der Anmeldung: **02.02.2000**
(21) Anmeldenummer: 99106815.6
(22) Anmeldetag: 06.04.1999
(51) Int. Cl.: B60H 1/32, F25B 43/00

(54) **Trocknerbehälter**

(30) Priorität: 28.07.1998 DE 29813441 U
(71) Anmelder: EHS, EUGEN, 80637 München (DE)
(72) Erfinder: EHS, EUGEN, 80637 München (DE)
(74) Vertreter: Grünecker, Kinkeldey, Stockmair & Schwanhäusser Anwaltssozietät

(57) **Zusammenfassung**

Bei einem Trocknerbehälter (B) für einen Kühlkreis, insbesondere einer Fahrzeug-Klimaanlage, mit wenigstens zwei miteinander verbundenen Behälterteilen (2, 3), von denen wenigstens einer Anschluß- und Befestigungseinrichtungen für im Behälterinneren plazierte Ausstattungskomponenten (5, 6, 7) aufweist und die Behälterteile Spritzgußformteile aus langfaserverstärktem Polymer sind und im Verbindungsbereich (V) ineinandergreifen, ist der Verbindungsbereich (V) als homogene Reibschweißverbindung (R) ausgebildet.

## Beschreibung

Die Neuerung bezieht sich auf einen Trocknerbehälter der im Oberbegriff des Anspruchs 1 angegebenen Art.

Insbesondere in Fahrzeug-Klimaanlagen enthält der Kühlkreis einen Trocknerbehälter, der eine wasseranziehende Substanz und gegebenenfalls Filtereinrichtungen enthält, um dem zirkulierenden Kältemittel Wasseranteile zu entziehen und Verunreinigungen aufzufangen. Ferner kann der Trocknerbehälter eine Zwischenspeicherfunktion für Kältemittel haben. Der Trocknerbehälter kann an der Hochdruckseite des Kühlkreises installiert sein oder auch an der Niederdruckseite, wobei er im letzteren Fall die Funktion eines sogenannnten die Kältemittel-Phasen separierenden Akumulators, gegebenenfalls mit Ölabscheidung, übernimmt. Solche Trocknerbehälter, insbesondere für die Hochdruckseite von Kühlkreisen, müssen druckfest sein und zusätzlich im Fahrzeug auftretenden Innen-Druckfestigkeit von rund 100 Bar bei Temperaturschwankungen zwischen - 40°C und + 140°C.

Früher wurden solche Trocknerbehälter aus verschweißten oder verlöteten Tiefziehteilen gefertigt, die hohes Gewicht hatten und teuer in der Herstellung waren. Hauptsächlich aus Gewichtsgründen wurden dann Trocknerbehälter mit einer glasfaserverstärkten Kunststoff-Wickelbeschichtung auf einer formgebenden Innenhülle eingesetzt, deren Herstellung aufwendig und teuer ist. Um bei geringem Gewicht Herstellungskosten einzusparen, wurden Trocknerbehälter aus Spritzgußformteilen aus unverstärktem oder mit Kurzfasern verstärkten Kunststoffen (US 5 184 480) entwickelt, die jedoch nicht die notwendige Druckfestigkeit und dauerhafte Dichtigkeit, vor allem im Verbindungsbereich erbringen. Gegenwärtig tendiert die Automobilbranche zu Trocknerbehältern aus Spritzgußformteilen eines langfaserverstärkten Polymers, wie er beispielsweise unter dem Handelsnamen Celstran seit ca. 1994 erhältlich ist, weil dieses Material in Druckbehältern anderen Kunststoffen deutlich überlegen ist.

Ein Trocknerbehälter, der aus zwei miteinander unter Einschluß einer Dichtung verschraubten Spritzgußformteilen aus langfaserverstärktem Polymer besteht, ist bekannt aus EP 0 745 497. Damit die hervorragenden Materialeigenschaften des langfaserverstärkten Polymers zum Tragen kommen können, ist eine aufwendige und teure Formgestaltung der Spritzgußformteile erforderlich, die bedingt, daß die Außenkontur des Trocknerbehälters wenigstens eine Stufe aufweist. Die anfänglich als Vorteil angesehene Trennbarkeit der verschraubten Behälterteile wird mittlerweile von den Anwendern im Automobilbau aus verschiedenen Gründen nicht mehr akzeptiert, z.B. weil der Trocknerbehälter unsachgemäß geöffnet und gegebenenfalls nicht mehr korrekt verschlossen werden und Kältemittel unkontrolliert austreten kann, und die notwendige Dichtung die Standzeit des Trocknerbehälters verkürzt. Weiterhin stellt die konstruktionsbedingte Stufe im Außenumfang des Trocknerbehälters einen Nachteil bei der Montage des Trocknerbehälters dar, weil dieser mit einer vorbestimmten Einbaurichtung in seine Halterung eingebracht werden muß und eine vorgegebene Montageposition benötigt. Bei den zumeist beengten Platzverhältnissen im Automobilbau ist dies ein schwerwiegender Nachteil.

Der Neuerung liegt die Aufgabe zugrunde, einen leichtgewichtigen Trocknerbehälter der eingangs genannten Art zu schaffen, der den Prüfbedingungen zuverlässig gewachsen ist und keiner Einschränkung hinsichtlich seiner Montage bedarf und kostengünstig herstellbar ist.

Die gestellte Aufgabe wird mit den im Anspruch 1 enthaltenen Merkmalen gelöst.

Dank der Reibschweißverbindung ist der Verbindungsbereich absolut dicht und ist der Trocknerbehälter den Prüfbedingungen problemlos gewachsen, d.h. Innendrücken von ca. 100 Bar bei Temperaturen zwischen -40 und +140°C. Ein weiterer Vorteil der Reibschweißverbindung liegt in der Möglichkeit, die Außenumfangskontur des Trocknerbehälters im Verbindungsbereich weitestgehend glatt zu belassen, weil die Reibschweißung keine außenliegende Behälter-Oberflächenstufe erfordert. Eine glatte Außenumfangskontur ermöglicht jedoch die unbehinderte Montage des Trocknerbehälters in seiner Halterung in jeder Richtung und in frei wählbaren Positionen. Überraschend wird mit der Reibschweißung die Druckfestigkeit des Trocknerbehälters auch unter Wechselbelastungen erzielt, weil der Polymer im Verbindungsbereich eine homogene Schmelzverbindung liefert und das Faserskelett des langfaserverstärkten Polymers unmittelbar angrenzend an den Verbindungsbereich aus dem Innendruck resultierende Spannungen und Kräfte aufnimmt, so daß nicht nur der Polymer allein zur Belastungsaufnahme herangezogen wird. Bei sorgfältiger Berücksichtigung von beim Reibschweißen zu beachtenden Parametern ist sogar denkbar, daß die Langfasern beider dauerhaft verbundener Behälterteile in gegenseitigen kraftübertragenden Eingriff gelangen. Da der Verbindungsbereich baulich einfach ist, sind die Behälterteile mit geringem Formaufwand zu spritzen.

Langfaserverstärkte Thermoplaste oder Polymere werden beispielsweise beschrieben in der Informationsschrift "Celstran" (eingetragene Handelsbezeichnung der Fa. Hoechst AG) Die neue Werkstoffgeneration - Thermoplaste mit Rückgrat - GFP/Faserverbundwerkstoffe - DM, der Fa. Hoechst AG, DE. Es handelt sich dabei beispielsweise um Polyamid PA 66 oder Polypropylen mit 30 bis 65 Gew.-% Glasfasern, die chemisch mit dem Thermoplast gekoppelt sind und im Gegensatz zu Kurzfasern Längen um 10 mm oder mehr haben. Derartige langfaserverstärkte Thermoplaste lassen sich nach Spritzgußverfahren verarbeiten und zeichnen sich durch sehr hohe Festigkeit aus.

Eine Reibschweißverbindung der hier angesprochenen Art wird dadurch hergestellt, daß die miteinander zu verbindenden Behälterteile in gegenseitigem Reibschluß relativ zueinander rotieren, bis aufgrund der Reibungswärme ein Anschmelzen des Thermoplasts eintritt. Die zu verbindenen Teile werden dann gefügt und positioniert, wobei eine homogene Schweißung stattfindet. Dank des hohen Anteils langer Fasern in dem Werkstoff kann dabei sogar eine wünschenswerte Verbindung auch zwischen den Fasern der beiden Teile erfolgen. Die Paarung langfaserverstärkter Thermoplast und Reibschweißverbindung ist für einen Trocknerbehälter ideal, weil er kostengünstig absolut dicht und innendruckfest ist, so daß die bisherigen Probleme überraschend einfach gelöst sind. Voraussetzung für die Anwendung des Reibschweißverfahrens bei einem Trocknerbehälter ist ein rotationssymmetrischer Aufbau der Behälterteile und auch eine Strukturierung der im Behälterinneren unterzubringenden Ausstattungskomponenten, die die relative Rotation der Behälterteile zum Reibschweißen zuläßt.

Gemäß Anspruch 2 ist die Reibschweißverbindung zwischen zu einer gemeinsamen Rotationsachse der Behälterteile konzentrischen Flächen vorgesehen. Die Reibschweißverbindung kann nur zwischen einem Zylinder-, Kegel- oder Kreisringflächen-Paar hergestellt werden, oder auch gleichzeitig zwischen mehreren dieser Flächenart-Paare. Es ergeben sich so die gewünschte Innendruckfestigkeit und auch hohe Festigkeit gegen Auseinanderziehen der Behälterteile.

Gemäß Anspruch 3 ist die Reibschweißverbindung zwischen wenigstens einem Zylinderflächenpaar und wenigstens einem Kreisringflächenpaar vorgesehen. Es ist dadurch eine Druckkraft- und Kraftaufnahme in zwei zueinander bezüglich der Rotationsachse unterschiedlich ausgerichteten Ebenen geschaffen.

Gemäß Anspruch 4 ist der eine Behälterteil wesentlich länger als der Behälterdeckel, der im längeren Behälterteil innen oder auf diesem außen festgelegt ist.

Gemäß Anspruch 5 ist von besonderer Bedeutung, daß an der Außenkontur des Verbindungsbereiches durch die Reibschweißverbindung ein wulst- oder stufenfreier Übergang vorliegt. Dies ermöglicht eine gerade durchgehende Außenumfangskontur des Trocknerbehälters, der sich dadurch in seiner Halterung in Längsrichtung verstellen und verdrehen läßt. Ferner kann der Trocknerbehälter in Richtung seiner Längsachse von jeder Seite in die Halterung eingeführt werden.

Gemäß Anspruch 6 ist die Reibschweißverbindung zwischen einem Zylinderflächenpaar und zwei angrenzenden Kreisringflächenpaaren vorgesehen, um ein Optimum hinsichtlich Innendruckfestigkeit und Trennfestigkeit der Behälterteile zu erzielen.

Gemäß Anspruch 7 ist die Länge des Zylinderflächenpaares ein Vielfaches der Weite der Kreisringflächenpaare. Die hauptsächliche Kraftübertragung findet zwischen den Zylinderflächen in der Reibschweißverbindung statt, während das miteinander verschweißte Kreisringflächenpaar assistiert. Die zwischen dem Zylinderflächenpaar erzeugte Reibwärme schmilzt auch die kleiner dimensionierten Kreisringflächen an, so daß beim Fügen eine homogene und durchgehende Reibschweißverbindung entsteht.

Bei einem konkreten Ausführungsbeispiel ist gemäß Anspruch 8 die Länge der Zylinderflächen des Paares ca. 24 mm, während die Weite der zur Außenseite des Trocknerbehälters führenden Kreisringflächenpaare, in denen ebenfalls eine Reibschweißung vorgesehen ist, nur 1,6 bis 1,8 mm beträgt. Mit dieser Dimensionierung läßt sich die Bildung eines störenden Wulstes an der Außenumfangskontur des Trocknerbehälters vermeiden.

Gemäß Anspruch 9 ist vor dem Reibschweißen zwischen den ineinandergreifenden Behälterteilen eine Reibpassung vorgesehen. Diese läßt sich bereits beim Spritzformen der Behälterteile vorgeben, indem beispielsweise der Außendurchmesser des innen eingesteckten Behälterteils um 1/10 bis 2/10 mm größer ist als der Innendurchmesser des anderen Behälterteils. Durch diese Bemessung kommt es bei der relativen Rotation der beiden Behälterteile relativ rasch zu einem gleichförmigen Anschmelzen und letztendlich zu einer homogenen Reibschweißverbindung. Beim Reibschweißen kann der eine Behälterteil festgehalten und nur der andere rotiert werden; ferner können beide Behälterteile gegensinnig rotieren oder gleichsinnig mit unterschiedlichen Rotationsgeschwindigkeiten. Die beiden Behälterteile können bereits in der axialen Endlage rotierten, die sie nach dem Verschweißen haben müssen. Es ist aber auch möglich, die Teile in geringfügig auseinandergezogenem Zustand relativ zueinander rotieren zu lassen und erst zum Abschluß des Reibschweißvorganges einen Fügeschritt oder einen Positionierschritt, mit mehr oder weniger Andruckkraft, zu vollziehen.

Gemäß Anspruch 10 ist der langfaserverstärkte Polymer oder Thermoplast ein PA 66 Polyamid bzw. Polypropylen mit zwischen 30 und 65 Gew.-% langen Glasfasern, deren Länge ca. 10 mm oder mehr betragen kann.

Anhand der Zeichnung werden Ausführungsformen des Neuerungsgegenstandes erläutert. Es zeigen:
- Fig. 1: einen Teillängsschnitt eines eingebauten Trocknerbehälters,
- Fig. 2 + 3: zwei Stadien beim Reibschweißen des Trocknerbehälters von Fig. 1,
- Fig. 4: einen Teillängsschnitt einer anderen Ausführungsform, und
- Fig. 5: einen Teillängsschnitt des Trocknerbehälters von Fig. 1 vor dem Einbau und ohne Darstellung seiner innenliegenden Ausstattungskomponenten.

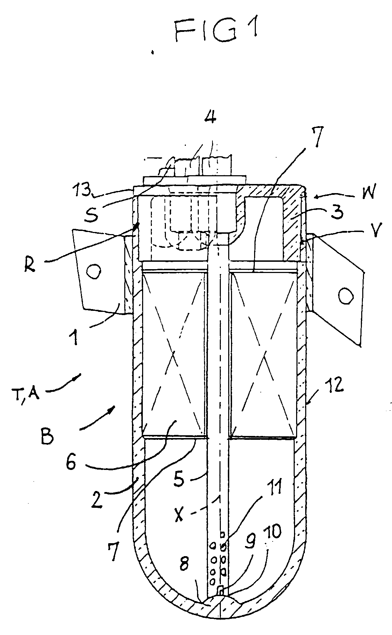

Ein Behälter B für einen Kühlkreis, z.B. ein Trocknerbehälter T oder Akumulator A für eine Fahrzeug-Klimaanlage, besteht in Fig. 1 aus einem langgestreckten Behälterteil 2 mit domförmigem Abschluß und offenem Ende und einem einen Behälterdeckel bildenden Behälterteil 3, der innen in das offene Ende des Behälterteils 2 eingesteckt und darin durch eine Reibschweißverbindung R in einem Verbindungsbereich V festgelegt ist. Bei der gezeigten Ausführungsform sind im Behälterteil 3 Anschluß- und Befestigungseinrichtungen für Anschlußleitungen 4 und gegebenenfalls einen Druck- oder Temperatursensor S geformt. Beide Behälterteile 2, 3 sind Spritzgußformteile aus einem langfaserverstärkten Polymer oder Thermoplast, bekannt unter dem Handelsnamen Celstran der Fa. Hoechst AG.

Für seine Funktion in dem Kühlkreis ist der Behälter B mit innenliegenden Komponenten ausgestattet, die der Führung des den Behälter B durchströmenden Kältemittels und dem Entzug von Wasseranteilen dienen. Der Behälter B ist rotationssymmetrisch um eine Rotationsachse X. Auch die innenliegenden Komponenten sind rotationssymmetrisch zu der Rotationsachse X angeordnet. Es handelt sich beispielweise um ein Steigrohr 5, das außen von wenigstens einem reifenförmigen Körper 6 aus wasseranziehendem Material, z.B. einem Zeolith-Granulat oder dgl., umgeben ist. Ferner können Feinst-Filtersiebe 7 vorgesehen sein. Im Ende des Behälterteils 2 ist eine zur Rotationsachse X rotationssymmetrische Erhöhung 8, gegebenenfalls mit einem Zentrierzapfen 9 eingeformt, die zur Zentrierung der innenliegenden Komponenten 5, 6, 7, zumindest des Steigrohres 5, dient. Wenigstens in der Nähe des oberen Endes 10 des Steigrohres 5 sind Austrittsöffnungen 11, oder Kanäle in der Erhöhung 8, geformt.

Die Außenumfangskontur des Behälters B geht auch im Verbindungsbereich V. wie bei W angedeutet, wulst- oder stufenfrei durch, so daß sich der Behälter B von unten oder von oben in seine Halterung 1 einschieben und frei positionieren läßt. Mit der Halterung 1 wird der Behälter B im Fahrzeuginneren festgelegt. Der stufen- oder wulstfreie Übergang W liegt zwischen der Außenkontur 12 des Behälterteils 2 und der Außenkontur 13 (einem Ringflansch) des Behälterteils 2 vor.

Die Reibschweißverbindung R wird hergestellt durch relatives Rotieren der beiden Behälterteile 2, 3 um die gemeinsame Rotationsachse X unter gleichzeitigem Reibschluß, und zwar bis zum Anschmelzen des Thermoplasten im Verbindungsbereich V.

Dies sei anhand der Fig. 2 und 3 erläutert. In Fig. 2 sind die Behälterteile 2 und 3 in Richtung der Rotationsachse X noch nicht vollständig ineinandergeschoben. Sie stehen miteinander mit Zylinderflächen 18, 19 beträchtlicher Länge in Reibschluß. Im Verbindungsbereich ferner vorgesehene Kreisringflächenpaare 14, 17 und 15, 16 stehen noch nicht notwendigerweise in gegenseitigem Reibkontakt. Zum Einleiten des Reibschweißvorganges werden die Behälterteile 2, 3 relativ zueinander rotiert, wobei dank des Reibschlusses des Zylinderflächenpaares 18, 19 Erwärmung stattfindet, bis der Thermoplast angeschmolzen ist. Diese Erwärmung wirkt auch auf die Kreisringflächenpaare 14, 17 und 15, 16, in denen der Thermoplast ebenfalls anschmilzt. Zum Abschluß des Reibschweißens werden die Behälterteile 2, 3 in Richtung der Pfeile gefügt und wird die relative Rotation gestoppt. Der Thermoplast des Behälterteils 2 verbindet sich homogen mit dem Thermoplasten des Behälterteils 2, so daß gemäß Fig. 3 eine durchgehende Reibschweißverbindung R zwischen den Behälterteilen 2, 3 gebildet ist. Da insbesondere das Kreisringflächenpaar 17 eine relativ geringe Weite besitzt im Vergleich zur Länge des Zylinderflächenpaares 18, 19, entsteht an der Außenumfangskontur ein weitestgehend stufen- und wulstfreier Übergang W. Aufgrund des hohen Anteils der langen Glasfasern des langfaserverstärkten Thermoplasten können sogar die gegenseitigen langen Fasern in der Reibschweißverbindung R zur Kraftübertragung von einem Behälterteil zum anderen Behälterteil mitwirken.

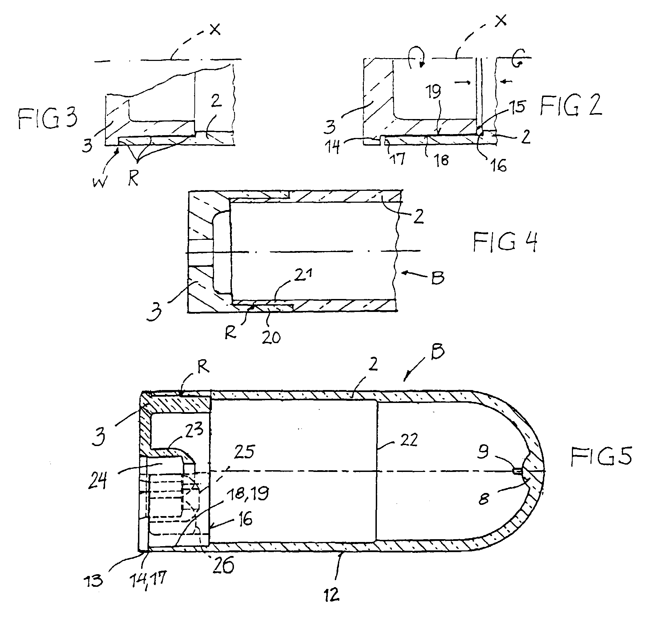

In Fig. 4 ist der den Behälterdeckel bildende Behälterteil 3 außen mit einem zylindrischen Flansch 20 über einen inneren zylindrischen Flansch 21 des anderen Behälterteils 2 gesteckt und mit diesem über die Reibschweißverbindung R auf die vorerwähnte Weise verbunden.

Es ist denkbar, die Reibschweißverbindung R nur im Bereich des Zylinderflächenpaares herzustellen und ein Kreisringflächenpaar als Positionierhilfe zu nutzen.

In Fig. 5 ist der Behälter B von Fig. 1 ohne Innenkomponenten gezeigt. Im den Behälterdeckel bildenden Behälterteil 3 sind Vorsprünge 23, 25, 26 nach innen vortretend spritzgußgeformt, die innere Kanäle 24 enthalten. Die Vorsprünge 23 und 25 dienen beispielsweise zum Anschließen von Leitungen 4 (Fig. 1), während der Vorsprung 6 zum Festlegen eines Sensors nutzbar ist. Obwohl dies nicht unbedingt erforderlich ist, kann im Behälterteil 2 eine umlaufende Schulter 22 geformt sein, die beispielsweise zum Positionieren einer innenliegenden Komponente dient. Ferner ist bereits beim Spritzgußformen des Behälterteils 2 die Erhöhung 8 mit dem zentrisch angeordneten Zentrierzapfen 9 geformt.

In den Fig. 1 bis 5 ist eine patronenförmige Gestalt des Behälters B mit relativ kurzem Behälterteil 3 dargestellt. Es liegt auf der Hand, daß der Behälter auch von anderer Form oder anderem Aussehen sein kann, und beispielsweise zwei in etwa gleich lange Behälterteile in einem in der Mitte liegenden Verbindungsbereich miteinander verbunden sein könnten. Ferner brauchen die Anschluß- und Befestigungseinrichtungen nicht nur in einem Behälterteil z.B. 3 geformt zu sein. Es könnten beide Behälterteile solche Anschluß- und Befestigungseinrichtungen besitzen, beispielsweise um eine axiale Durchströmung des Behälters zu erzielen, oder um einen oder den anderen Anschluß seitlich einmünden zu lassen.

Bei dem Behälter B in den Fig. 1 und 5 beträgt die axiale Länge der Zylinderflächen 18, 19 rund 24 mm, während die radiale Weite der Kreisringflächenpaare 14, 17 bzw. 15, 16 nur zwischen 1,5 und 2 mm, zweckmäßigerweise bei 1,75 mm, liegt. Damit die Behälterteile leicht ineinandergesteckt werden können, ist es zweckmäßig, zumindest eine der Zylinderflächen 18, 19 mit einer geringfügigen Schräge von beispielsweise 1° zu gestalten.

## Patentansprüche

1. Trocknerbehälter (B) für einen Kühlkreis, insbesondere einer Fahrzeug-Klimaanlage, mit wenigstens zwei miteinander verbundenen Behälterteilen (2, 3), von denen wenigstens einer (3, 2) Anschluß- und Befestigungseinrichtungen (23, 24, 25, 26) für im Behälterinneren plazierte Ausstattungskomponenten (5, 6, 7) aufweist, wobei die Behälterteile (2, 3) Spritzgußformteile aus langfaserverstärktem Polymer sind und im Verbindungsbereich (V) ineinandergreifen, **dadurch gekennzeichnet,** daß der Verbindungsbereich (V) als homogene Reibschweißverbindung (R) ausgebildet ist.

2. Trocknerbehälter nach Anspruch 1, **dadurch gekennzeichnet,** daß die Reibschweißverbindung (R) zwischen vor dem Reibschweißen zu einer gemeinsamen Rotationsachse (X) der Behälterteile (2, 3) konzentrischen Zylinder-, Kegel- oder Kreisringflächen-Paaren der miteinander verbundenen Behälterteile (2, 3) vorgesehen ist.

3. Trocknerbehälter nach Anspruch 2, **dadurch gekennzeichnet,** daß die Reibschweißverbindung (R) zwischen wenigstens einem Zylinderflächen-Paar (18, 19) und wenigstens einem an das Zylinderflächen-Paar angrenzenden Kreisringflächen-Paar (14, 17, 15, 16) gebildet ist.

4. Trocknerbehälter nach wenigstens einem der vorhergehenden Ansprüche, **dadurch gekennzeichnet,** daß der eine Behälterteil (3) ein im Verhältnis zur Länge des anderen Behälterteils (2) wesentlich kürzerer Behälterdeckel ist, der am offenen Ende des anderen Behälterteils innen oder außen durch die Reibschweißung (R) festgelegt ist.

5. Trocknerbehälter nach Anspruch 1, **dadurch gekennzeichnet,** daß im Verbindungsbereich (V) an der Außenumfangskontur (12, 13) des Trocknerbehälters (B) ein wulst- oder stufenfreier Übergang (W) von einem Behälterteil (2) in den anderen Behälterteil (3) vorgesehen ist.

6. Trocknerbehälter nach Anspruch 3, **dadurch gekennzeichnet,** daß im Verbindungsbereich (V) ein Zylinderflächenpaar (18, 19) und zwei an das Zylinderflächen-Paar (18, 19) angrenzende Kreisringflächen-Paare (14, 17, 15, 16) durch die Reibschweißung (R) verbunden sind.

7. Trocknerbehälter nach wenigstens einem der vorhergehenden Ansprüche, **dadurch gekennzeichnet,** daß die in Richtung der Rotationsachse (X) gesehene Länge des Zylinderflächen-Paares (18, 19) ein Vielfaches der in etwa senkrecht zur Rotationsachse (X) gesehenen Weite jedes Kreisringflächen-Paares (14, 17, 16, 15) ist, z.B. das 10- bis 20fache, vorzugsweise das 13- bis 15fache.

8. Trocknerbehälter nach Anspruch 7, **dadurch gekennzeichnet,** daß bei einer Länge des Zylinderflächen-Paares (18, 19) von ca. 24 mm die Weite des zur Außenumfangskontur (12, 13) führenden Kreisringflächen-Paares (14, 17) zwischen 1,6 bis 1,8 mm beträgt.

9. Trocknerbehälter nach wenigstens einem der vorhergehenden Ansprüche, **dadurch gekennzeichnet,** daß zwischen den ineinandergreifenden Behälterteilen (2, 3) bzw. dem Zylinderflächen-Paar (18, 19) vor dem Reibschweißen eine Reibpassung vorgesehen ist.

10. Trocknerbehälter nach wenigstens einem der vorhergehenden Ansprüche, **dadurch gekennzeichnet,** daß der langfaserverstärkte Polymer ein gespritztes "66"-Polyamid oder Polypropylen mit zwischen 30 und 70 Gew.-% Glaserfasern mit einer Länge von ca. 10 mm und mehr ist.
